# EUROPÄISCHE PATENTSCHRIFT

(11) **EP 0 493 692 B1**
(45) Veröffentlichungstag und Bekanntmachung des Hinweises auf die Patenterteilung: **03.06.1998**
(21) Anmeldenummer: 91120681.1
(22) Anmeldetag: 02.12.1991
(51) Int. Cl.: C08G 81/02, C08L 53/00, F16J 15/32

(54) **Temperaturbeständiges thermoplastisches Elastomer**
Heat-resistant thermoplastic elastomer
Elastomère thermoplastique résistant à haute température

(30) Priorität: 04.01.1991 DE 4100120
(43) Veröffentlichungstag der Anmeldung: 08.07.1992
(73) Patentinhaber: HUBER + SUHNER AG, CH-8330 Pfäffikon (CH)
(72) Erfinder: Struckmeyer, Horst F., Dr. Dipl.-Chem., W-5093 Burscheid (DE); Treiber, Hartmut, Dr., W-4018 Langenfeld (DE); Widmer, Hans, Dr., CH-8330 Pfäffikon (CH)
(74) Vertreter: Groner, Manfred

(56) Entgegenhaltungen:
- EP-A- 0 036 279
- US-A- 3 909 463

## Beschreibung

Die Erfindung betrifft ein hochtemperaturbeständiges thermoplastisches Elastomer auf der Basis eines Kautschuks und eines thermoplastischen Hartpolymers, wobei der Kautschuk und/oder das thermoplastische Hartpolymer mit einem Kompatibilisierungsmittel chemisch vorbehandelt sind, insbesondere für die Herstellung des elastomeren Dichtteiles von Lippendichtungsringen, zur Abdichtung rotierender Wellen oder auf- und abgehender Stangen, mit einem die Dichtlippe bildenden elastomeren Dichtteil und einem Gehäusering oder Versteifungsring aus verformungssteifem Material.

Lippendichtungsringe, wie Wellendichtungsringe, zur Abdichtung rotierender Wellen oder Stangendichtungen und Kolbenabdichtungen, zur Abdichtung beispielsweise in Stoßdämpfern oder Gasfedern besitzen einen die Dichtlippe bildenden dynamischen Dichtteil aus einem Elastomer und einem den Haftteil bildenden Gehäusering oder Versteifungsring aus verformungssteifem Material. Die Herstellung herkömmlicher Lippendichtungsringe ist aufwendig und kostenintensiv, denn nach herkömmlichen Herstellungsverfahren müssen die verwendeten Kautschukmischungen in eine Vulkanisierform überführt und dort energieaufwendig mit relativ langen Heizzeiten bei gleichzeitiger Bindung an die gegebenenfalls haftmittelbehandelten Gehäuseringe oder Versteifungsringe in den gummielastischen Zustand vulkanisiert werden.

Nach der deutschen Patentanmeldung 40 05 244 hat man schon für das elastomere Dichtteil ein thermoplastisches Elastomer auf der Basis von Nitrilkautschuk und einem Polyolefin zur Herstellung derartiger Lippendichtungsringe verwendet. Vorteilhaft kann dabei das thermoplastische Elastomer im geschmolzenen Zustand im Spritzgussverfahren verarbeitet werden, wobei sich bei Verwendung von Gehäuseringen oder Versteifungsringen aus Kunstharzmaterialien in der Form eine funktionsmässig optimale Bindung zwischen Elastomerteil und Kunstharzteil einstellt, so dass auf eine aufwendige Haftgrundvorbereitung oder Haftmittelbehandlung des Kunstharz teiles wirtschaftlich vorteilhaft verzichtet werden kann.

Thermoplastische Elastomere aus Nitrilkautschuken oder EPDM-Kautschuken mit Polyolefinen, Polyurethanen oder Polyamiden sind beispielsweise aus der EP-PA 00 36 279, der DE-PS 38 34 103 und der EP-PA 03 12 520 bekannt. In diesen thermoplastischen Elastomeren sind die Kautschukmoleküle mit den Polyolefinmolekülen oder Polyamidmolekülen chemisch untereinander gebunden, wobei durch chemische Vorbehandlung den Kautschuken und/oder den thermoplastischen Kunststoffen funktionelle Gruppen aufgepropft sind, wodurch sie kompatibilisiert wurden. Über die funktionellen Gruppen kann dann die chemische Reaktion der ohne Vorbehandlung nicht miteinander reagierenden Kautschuk- und Kunststoffmoleküle erfolgen, so daß ein Produkt mit sowohl elastomeren als auch thermoplastischen Eigenschaften entsteht.

Lippendichtungsringe mit einem elastomeren Dichtteil aus diesem und anderen im Handel befindlichen thermoplastischen Elastomeren besaßen insbesondere bei extremen Belastungen noch nicht die erforderlichen Eigenschaften. Insbesondere bei Einsatztemperaturen im Bereich zwischen 130 und 180°C wurden die geforderten gummielastischen Eigenschaften nicht erreicht, und an der durch Reibung höheren Temperaturen ausgesetzten Dichtkante im elastomeren Dichtteil wurden nach längeren Betriebszeiten Zerstörungen und Leckagen festgestellt.

Der vorliegenden Erfindung liegt daher die Aufgabe zugrunde, ein hochtemperaturbeständiges thermoplastisches Elastomer zu schaffen, welches verbesserte technologische Eigenschaften auch im erhöhten Einsatztemperaturbereich von Lippendichtungsringen aufweist.

Erfindungsgemäß wird diese Aufgabe durch ein thermoplastisches Elastomer gelöst, welches aus einem hydrierten Nitrilkautschuk und einem thermoplastischen Polyolefin nach Kompatibilisierung gebildet ist. Das bevorzugt verwendete thermoplastische Elastomer enthält dabei 60 bis 80 Gewichtsteile an hydriertem Nitrilkautschuk und entsprechend 20 bis 40 Gewichtsteile an thermoplastischem Polyolefin.

Die eingesetzten hydrierten Nitrilkautschuke sind unter dem Handelsnamen THERBAN der Firma Bayer AG, Leverkusen, erhältlich.

Die bevorzugt verwendeten thermoplastischen Polyolefine bestehen aus handelsüblichen Polyethylenen, Polypropylenen oder Polybutenen.

Die Herstellung der kompatibilisierten Polyolefine erfolgt, wie an und für sich aus der EP-PS 00 36 279 bekannt, durch Einmischen des Kompatibilisierungsmittels in das geschmolzene thermoplastische Polymer, so daß die chemische Reaktion erfolgen kann. Das bevorzugt eingesetzte Kompatibilisierungsmittel besteht aus einem Dimethylol-phenol, wie insbesondere dem Dimethylol-p-octylphenol.

Die Herstellung der kompatibilisierten Kautschukmischungen erfolgt durch Aufpropfen von Maleinsäureanhydrid oder Acrylsäureanhydrid auf die als Basispolymere eingesetzten Kautschuke bei hohen Temperaturen.

Die Herstellung des thermoplastischen Elastomers erfolgt bevorzugt in einem aufgeheizten, kontinuierlich arbeitenden Mischaggregat. In das aufgeheizte Mischaggregat wird zunächst das kompatibilisierte Polyolefin gegeben und danach die Elastomermischung auf Basis des hydrierten Nitrilkautschuks mit Zusätzen an Vernetzern, bevorzugt aus organischen Peroxiden sowie den weiteren für die Kautschukverarbeitung üblichen Zusatzstoffen. In der Hitze erfolgt dann die Verteilung des Kautschuks in der Matrix aus kompatibilisiertem Polyolefin unter Ausbildung eines interpenetrierenden Netzwerkes, wobei gleichzeitig die Kautschukmoleküle ausvulkanisieren. Das erhaltene thermoplastische Elastomer ist in der Hitze spritzfähig und kann direkt vom Extruder in die entsprechende Form mit eingelegtem Gehäusering oder Versteifungsring aus Kunstharz eingesetzt werden. Dabei entsteht in der Form der einsatzfähige Lippendichtungsring mit elastomerem Dichtteil und damit verbundenem Gehäusering oder Versteifungsring.

Die erhaltenen Lippendichtungsringe wurden in Bezug auf ihre Funktionsfähigkeit getestet. Die Beständigkeitswerte, insbesondere gegenüber abzudichtenden Mineralölprodukten, die Festigkeitswerte und die Beständigkeit gegenüber Alterung und Abrieb entsprachen etwa den Werten, die bei Verwendung herkömmlicher vulkanisierter Fluorkautschukmischungen und hydrierter Nitrilkautschukmischungen erzielt werden.

Die Bindefestigkeit zwischen Elastomerteil und Gehäuse- beziehungsweise Versteifungsringen wurde nach DIN 53.531 durch Zugversuche geprüft und entsprach den funktionsmäßigen Erfordernissen bei Lippendichtungsringen, obwohl weder Haftmittel noch Haftgrundvorbereitungen angewendet wurden. Bei den Zugversuchen wurden lediglich bei hoher Zugbelastung Elastomerrisse, nicht aber Adhäsivbrüche in der Bindungsgrenzschicht festgestellt. Die Temperaturbelastbarkeit der Lippendichtungsringe wurde in Prüfgeräten vor allem im Temperaturbereich zwischen 130 und 180°C getestet, und sie entsprach, insbesondere hinsichtlich des elastischen Verhaltens, dem Verhalten von herkömmlich aus Elastomervulkanisaten hergestellten Lippendichtungsringen. Die durch Reibung thermisch höher belastete Dichtkante wies auch im Dauertest nach 60 Stunden Laufdauer und mehr keine Schäden auf, und der Lippendichtungsring blieb dicht.

Durch den Einsatz der erfindungsgemäßen thermoplastischen Elastomere für das Dichtteil von Lippendichtungsringen ist es gelungen, einen gegebenenfalls auch extrem belastbaren, funktionsmäßig einwandfreien Lippendichtungsring herzustellen. Der Lippendichtungsring ist, wie an und für sich aus der deutschen Patentanmeldung 40 05 244 bekannt, einfach und dadurch wirtschaftlich herzustellen, wobei die gleichzeitig erzielte höhere Temperaturbelastbarkeit den betriebssicheren Einsatz des Lippendichtungsringes mit verlängerter Lebensdauer ermöglicht.

Im Sinne der Erfindung ist es auch möglich, das erfindungsgemäße thermoplastische Elastomer zur Herstellung ähnlich belasteter Elastomerartikel zu verwenden, wobei auch bei diesen Elastomerartikeln vorteilhaft die leichte und wirtschaftliche Herstellbarkeit durch vor allem gute Haftfestigkeiten zu Versteifungselementen bei hoher Temperaturbelastbarkeit und optimalen Beständigkeitswerten hervorzuheben ist.

## Patentansprüche

1. Hochtemperaturbeständiges thermoplastisches Elastomer auf der Basis eines Kautschuks und eines thermoplastischen Hartpolymers, wobei der Kautschuk und/oder das thermoplastische Hartpolymer mit einem Kompatibilisierungsmittel chemisch vorbehandelt sind, insbesondere für die Herstellung des elastomeren Dichtteiles von Lippendichtungsringen, zur Abdichtung rotierender Wellen oder auf- und abgehender Stangen mit einem die Dichtlippe bildenden elastomeren Dichtteil und einem damit verbundenen Gehäusering oder Versteifungsring aus verformungssteifem Material, dadurch gekennzeichnet, dass das thermoplastische Elastomer aus 60 bis 80 Gewichtsteilen hydriertem Nitrilkautschuk und 20 bis 40 Gewichtsteilen thermoplastischem Polyolefin nach Kompatibilsierung gebildet ist.

2. Thermoplastisches Elastomer nach Anspruch 1, dadurch gekennzeichnet, dass das kompatibilisierte Elastomer durch Aufpfropfen von Maleinsäure anhydrid oder Acrylsäureanhydrid auf die als Basispolymer eingesetzten Kautschuke bei hohen Temperaturen gebildet ist.

3. Thermoplastisches Elastomer nach Anspruch 1 oder 2, dadurch gekennzeichnet, dass im fertiggestellten thermoplastischen Elastoformartikel das mit dem Elastomerteil verbundene verformungssteife Gehäuseteil oder Versteifungsteil aus einem thermoplastischen, gegebenenfalls verstärkten Kunststoff besteht.

## Claims

1. A thermoplastic elastomer resistant to high temperature and based on a rubber and a thermoplastic hard polymer, the rubber and/or the thermoplastic hard polymer being chemically pretreated with a compatibilising agent, more particularly for producing the elastomeric sealing part of lip seal rings for sealing rotating shafts or reciprocating rods, comprising an elastomeric sealing part constituting the sealing lip and connected to a casing ring or reinforcing ring of deformation-resistant material, characterised in that the thermoplastic elastomer is made from 60 to 80 parts by weight of hydrogenated nitrile rubber and 20 to 40 parts by weight of thermoplastic polyolefin after compatibilisation.

2. A thermoplastic elastomer according to claim 1, characterised in that the compatibilised elastomer is formed at elevated temperature by grafting maleic acid anhydride or acrylic acid anhydride on to the rubbers used as base polymer.

3. A thermoplastic elastomer according to claim 1 or 2, characterised in that in the finished thermoplastic elastomeric moulded article the deformation-resistant casing part or the reinforcing part connected to the elastomeric part is made of an optionally reinforced thermoplastic.

## Revendications

1. Elastomère thermoplastique résistant aux hautes températures à base d'un caoutchouc et d'un polymère thermoplastique rigide, le caoutchouc et/ou le polymère thermoplastique rigide étant prétraités chimiquement à l'aide d'un agent compatibilisant, destiné en particulier à l'élaboration de l'élément d'étanchéité élastomère de bagues d'étanchéité à lèvres, à l'étanchement d'arbres tournants ou de tringles à mouvement descendant et ascendant avec un élément d'étanchéité élastomère formant la lèvre d'étanchéité et un anneau de boîtier ou un anneau raidisseur solidaire en un matériau rigide à la déformation, caractérisé en ce que l'élastomère thermoplastique est formé, après compatibilisation, à partir de 60 à 80 parties en poids de caoutchouc nitrile hydrogéné et de 20 à 40 parties en poids de polyoléfine thermoplastique.

2. Elastomère thermoplastique selon la revendication 1, caractérisé en ce que l'élastomère compatibilisé est formé à haute température par greffage d'anhydride maléique ou d'anhydride acrylique sur les caoutchoucs mis en oeuvre en tant que polymères de base.

3. Elastomère thermoplastique selon la revendication 1 ou 2, caractérisé en ce que, dans l'article élastomère moulé thermoplastique fini, l'élément de boîtier ou l'élément raidisseur rigide à la déformation, solidaire de l'élément élastomère est constitué par une matière synthétique thermoplastique, éventuellement renforcée.
